# EUROPÄISCHE PATENTSCHRIFT

(11) **EP 2 310 644 B1**
(45) Veröffentlichungstag und Bekanntmachung des Hinweises auf die Patenterteilung: **15.02.2012**
(21) Anmeldenummer: 09769125.7
(22) Anmeldetag: 10.06.2009
(51) Int. Cl.: F01N 3/28, B01J 35/04

(54) **ABGASBEHANDLUNGSEINHEIT MIT METALLFOLIEN GERINGER MATERIALDICKE**
EXHAUST-GAS TREATMENT UNIT HAVING METAL FOILS OF SMALL MATERIAL THICKNESS
UNITÉ DE TRAITEMENT DE GAZ D'ÉCHAPPEMENT AVEC DES FEUILLES MÉTALLIQUES À FAIBLE ÉPAISSEUR DE MATÉRIAU

(30) Priorität: 27.06.2008 DE 102008030754
(43) Veröffentlichungstag der Anmeldung: 20.04.2011
(73) Patentinhaber: Emitec Gesellschaft für Emissionstechnologie mbH, 53797 Lohmar (DE)
(72) Erfinder: WIERES, Ludwig, 51491 Overath (DE); KONIECZNY, Jörg-Roman, 53804 Much (DE); BRÜCK, Rolf, 51429 Bergisch Gladbach (DE); SEELIGER, Stefan, 99947 Alterstedt (DE); KOTTHOFF, Hubertus, 53809 Ruppichteroth (DE)
(74) Vertreter: Rössler, Matthias
(86) Internationale Anmeldenummer: PCT/EP2009/057166
(87) Internationale Veröffentlichungsnummer: WO 2009/156276

(56) Entgegenhaltungen:
- WO-A-2004/018851

## Beschreibung

Die vorliegende Erfindung betrifft eine Abgasbehandlungseinheit aufweisend zumindest ein Gehäuse und Wabenstruktur, wobei die Wabenstruktur Kanäle hat, welche zwischen Stirnflächen der Wabenstruktur verlaufen und welche mit mindestens teilweise strukturierten Metallfolien gebildet sind, die eine Materialdicke bis maximal 50 µm (Mikrometer) aufweisen. Eine solche Abgasbehandlungseinheit findet insbesondere Einsatz als Katalysator-Trägerkörper in Abgassystem mobiler Verbrennungskraftmaschinen, wie beispielsweise in Personenkraftwagen.

Solche Abgasbehandlungseinheiten sind regelmäßig hohen thermischen und dynamischen Belastungen im Abgassystem eines Otto- oder Diesel-Motors ausgesetzt. Die thermische Belastung ergibt sich insbesondere aufgrund der Temperaturschwankungen des Abgases sowie den katalytisch motivierten Umsetzungsvorgängen des Abgases mit dem Katalysator. So werden beispielsweise Temperaturspitzen bis 800 °C erreicht. Darüber hinaus sind die dynamischen Druckschwankungen zu beachten, die einerseits aufgrund der internen Verbrennungsvorgänge im Motor als auch aufgrund von Fahrzeugvibrationen auftreten. Beide Belastungen sind verstärkt festzustellen, wenn die Abgasbehandlungseinheit nahe der Verbrennungskraftmaschine, insbesondere im Kontakt mit der Verbrennungskraftmaschine, positioniert ist. Hier können noch höhere Temperaturen und kräftigere Druckimpulse auf die Wabenstruktur einwirken.

Gerade diese Umgebungsbedingungen für eine solche Abgasbehandlungseinheit machen den Einsatz von besonders dünnen Metallfolien schwierig. Die im Bereich der Stirnfläche, gerade im Bereich des Eintritts des Abgases in die Wabenstruktur, auftretenden Belastungen führen gelegentlich zur Zerstörung der Metallfolie. Aus der WO 97/15393 ist bereits ein Wabenkörper aus Blechlagen mit Verstärkungsstrukturen bekannt. Dabei wird zur Verbesserung der Dauerhaltbarkeit des Wabenkörpers vorgeschlagen, an dem stirnseitigen Endbereichen der Blechlagen Umfalzungen auszubilden. Durch diese umgefalzten Bereiche werden die Dicken der Blechlagen verdoppelt, ohne dass sich die Masse des Wabenkörpers wesentlich erhöht. Damit soll eine Versteifung der Blechlagen selbst erreicht werden, so dass die Randbereiche in ihrem Verhalten konventionellen, dickeren Blechlagen entsprechen.

Derartige Umfalzungen sind auch aus der WO-A1-2004/018851 bekannt. Dort werden jedoch durch eine spezielle Herstellung der Umfalzungen fluchtende obere und untere Anlageflächen an den Metallfolien erzeugt. Damit soll eine ganzflächige Anbindung der Extrema über deren gesamte axiale Erstreckung an benachbarte Metallfolien oder an das Gehäuse erreicht werden.

Auch wenn mit der dort beschriebenen Ausgestaltung des Wabenkörpers mit Verstärkungsstruktur bereits für einen breiten Anwendungsfall Verbesserungen erzielt werden konnten, so können bei besonderen Belastungen gleichwohl Materialermüdungen der Metallfolien im Bereich der Stirnseite auftreten. Außerdem wurde festgestellt, dass insbesondere bei unsymmetrischen oder verschiedenartig gekrümmten Anordnungen der Blechlagen Knicke der Metallfolien und/oder Kanalverschlüsse auftreten können.

Hiervon ausgehend ist es Aufgabe der vorliegenden Erfindung, die mit Bezug auf den Stand der Technik geschilderten Probleme zumindest teilweise zu lösen. Insbesondere soll eine Abgasbehandlungseinheit angegeben werden, die eine längere Dauerhaltbarkeit bei extremen Belastungen der Wabenstruktur aufweist. Gleichfalls soll sich die Abgasbehandlungseinheit durch ein geringes Gewicht und definiertes, thermisches Verhalten auszeichnen. Darüber hinaus soll ein Verfahren zur Herstellung einer solchen Abgaseinheit angegeben werden.

Diese Aufgaben werden gelöst mit einer Abgasbehandlungseinheit mit den Merkmalen des Patentanspruchs 1. Vorteilhafte Ausgestaltungen der Erfindung sind in den abhängig formulierten Patentansprüchen angegeben. Es sei darauf hingewiesen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, führt weitere Ausführungsvarianten der Erfindung an.

Die erfindungsgemäße Abgasbehandlungseinheit weist zumindest ein Gehäuse und eine Wabenstruktur auf. Die Wabenstruktur hat Kanäle, welche zwischen Stirnflächen der Wabenstruktur verlaufen und welche mit mindestens teilweise strukturierten Metallfolien gebildet sind, die eine Materialdicke bis maximal 50 µm aufweisen. Wenigstens ein Teil der Metallfolien ist im Bereich der Stirnfläche mit einer Umfalzung einer vorgegebenen Breite ausgeführt und im Bereich dieser Umfalzung ist zudem eine Schweißnaht der Metallfolie mit sich selbst ausgebildet.

Im Hinblick auf die Wabenstruktur ist anzumerken, dass diese bevorzugt mit einer Kanaldichte von 100 bis 800 cpsi (Zellen pro Quadratinch) ausgeführt ist, insbesondere mit einer Kanaldichte im Bereich von 100 bis 400 cpsi. Die Kanäle verlaufen dabei bevorzugt im Wesentlichen gradlinig und parallel zueinander von einer Stirnfläche hin zur gegenüberliegenden Stirnfläche der Wabenstruktur, so dass die Metallfolien einen geringen Strömungswiderstand darstellen. Damit kann insbesondere der Druckverlust über die Wabenstruktur für das sie durchströmende Abgas gering gehalten werden, was insbesondere auch mit einer reduzierten dynamischen Belastung der Metallfolien einhergeht. Grundsätzlich ist es möglich, die Wabenstruktur mit wenigstens teilweise glatten und teilweise strukturierten Metallfolien auszubilden, bevorzugt ist jedoch die Ausgestaltung, wobei zum Aufbau der Wabenstruktur Metallfolien eingesetzt werden, die entweder glatt oder strukturiert sind. Als Struktur kommt insbesondere eine Wellung in Betracht. Zur Verwirklichung einer großen Oberfläche der Wabenstruktur in einem vorgegebenen Volumen der Abgasbehandlungseinheit und zur Gewährleistung eines geringen Gewichts der Abgasbehandlungseinheit insgesamt werden Metallfolien mit einer Materialdicke bis maximal 50 µm vorgeschlagen. Ganz besonders findet die Anwendung Einsatz bei Metallfolien mit einer Materialdicke von maximal 30 µm oder sogar von maximal 20 µm.

Im Bereich der Stirnfläche sind nun mit den Metallfolien, vorzugsweise mit allen Metallfolien, Umfalzungen, einer vorgegebenen Breite gebildet. Umfalzungen sind insbesondere Teilabschnitte der Metallfolien, die umgebogen bzw. umgeklappt sind, so dass diese aneinander anliegen. Folglich sind die Umfalzungen mit dem Material der Metallfolien selbst gebildet, also mit diesen einstückig ausgeführt. Dabei ist darauf hinzuweisen, dass bevorzugt nicht nur glatte Metallfolien sondern auch die strukturierten Metallfolien mittels solcher Umfalzungen zumindest nahe einer der beiden Stirnflächen aufweisen. Ganz besonders bevorzugt ist, dass alle Metallfolien an einer Stirnfläche mit Umfalzungen aufgeführt sind oder sogar an beiden Stirnflächen. Im Bereich dieser Umfalzungen ist nun eine Schweißnaht vorgesehen. Damit wird der umgefalzte bzw. umgebogene Teilabschnitt der Metallfolie an einen anderen Abschnitt derselben Metallfolie fixiert. Dabei erfolgt die Fixierung bevorzugt großflächig. Die Schweißnaht ist dabei so ausgeführt, dass eine möglichst geringe Änderung der Eigenschaften der Metallfolie selbst stattfindet. Dabei ist die Schweißnaht ganz besonders bevorzugt mit einem Impulsschweißverfahren hergestellt. Dieses wird in einer besonders vorteilhaft angesehenen Ausführung später dargestellt.

Durch die Schweißnaht wird der Metallfolie im Bereich der Stirnfläche eine verbesserte und signifikante Steifigkeit verliehen, die den Einsatz solcher Abgasbehandlungseinheiten auch unter extremen thermischen und dynamischen Belastungen ermöglicht. Während bislang davon ausgegangen wurde, dass bereits beim Löten solcher dünnen Metallfolien unerwünschte Gefügeveränderungen des Materials und der Blechfolien eintreten, wurde hier erstmals herausgefunden, dass eine entsprechende Schweißnaht die Umfalzungen stabilisiert und damit eine weitere beachtliche Verbesserung der Dauerhaltbarkeit solcher Metallfolien im Einsatz ermöglicht.

Darüber hinaus ist erfindungsgemäß vorgesehen, dass das Gehäuse eine Vielzahl hin zur Wabenstruktur gerichtete, lokale Einbuchtungen aufweist. Damit ist insbesondere ein Gehäuse gemeint, dass beispielsweise eine zylindrische, ovale oder eine ähnliche Grundform hat, jedoch mit einer Vielzahl von lokalen Einbuchtungen ausgeführt ist, die nach innen weisen. Die Einbuchtungen können eine runde und/oder eckige Grundfläche aufweisen. Diese lokalen Einbuchtungen haben beispielsweise eine Grundfläche von mindestens 2 cm² (Quadratzentimeter), gegebenenfalls auch mindestens 5 cm². Mit diesen lokalen Einbuchtungen werden die Kontaktbereiche hin zur Wabenstruktur reduziert, wobei die Wabenstruktur besser thermisch von der Umgebung entkoppelt ist. Außerdem führt eine solche Ausgestaltung des Gehäuses zu einer Versteifung, so dass hier insbesondere geringe Gehäusestärken eingesetzt werden können, beispielsweise Gehäusestärken kleiner 1 mm (Millimeter) oder sogar kleiner 0,5 mm. Auch durch diesen Effekt kann die Abgasbehandlungseinheit mit einem noch geringeren Gewicht ausgeführt werden.

Erfindungsgemäß weisen zumindest die Metallfolien miteinander nur in dem Bereich der Umfalzungen Lötverbindungen auf Bei diesen Lötverbindungen handelt es sich insbesondere um Hochtemperatur-Lötverbindungen und/oder Vakuumlötverbindungen. Die Lötverbindungen sind insbesondere geeignet, die im Abgassystem auftretenden thermischen Belastungen auszuhalten, also selbst Temperaturen von 800 °C oder sogar 1000 °C unbeschadet überstehen. Insoweit wird hier vorgeschlagen, dass diese Lötverbindungen nur flächig und/oder lokal im Bereich der Umfalzungen ausgebildet sind, wobei bevorzugt die Umfalzung der einen Metallfolien mit der Umfalzung der benachbarten Metallfolie über Lötverbindungen verbunden sind.

Weiter ist auch erfindungsgemäß, dass mindestens 1 % und höchstens 20 % innerer Kontaktpunkte der Metallfolien in dem Bereich eine Lötverbindung bilden. Aufgrund der Tatsache, dass regelmäßig strukturierte Metallfolien und glatte Metallfolien aneinander anliegen, entstehen zwischen den Metallfolien mehrere "innere Kontaktpunkte" (Kontaktstellen zwischen den Metallfolien), die grundsätzlich zur Bereitstellung von Lötverbindungen zur Verfügung stehen würden. Hier wird jedoch vorgeschlagen, nur einen geringen Teil dieser inneren Kontaktpunkte für Lötverbindungen einzusetzen. Das heißt mit anderen Worten auch, dass beispielsweise in Richtung der Erstreckung der Metallfolie eine Vielzahl von inneren Kontaktstellen gebildet sind, aber in Richtung der Erstreckung wiederholt zumindest fünf (5) innere Kontaktpunkte oder sogar mindestens zehn (10) innere Kontaktpunkte nicht für eine Lötverbindung eingesetzt werden. Zur Ausbildung solcher Lötverbindungen, die ganz gezielt auf vorbestimmte innere Kontaktpunkte ausgerichtet sind, kommen insbesondere Druckverfahren (Ink-Jet-Verfahren) zur Applikation des Haftmittels und/oder des Lotmaterials zum Einsatz.

Gemäß einer Weiterbildung der Abgasbehandlungseinheit wird vorgeschlagen, dass sich die Schweißnaht über die Breite der Umfalzung und eine Erstreckung der Umfalzung entlang der Metallfolie erstreckt. Damit ist insbesondere gemeint, dass über die gesamte Anlagefläche der Umfalzung an der Metallfolie selbst eine Schweißnaht ausgebildet ist. Somit soll insbesondere auch vermieden werden, dass beachtliche Hohlräume mit der Umfalzung gebildet sind, die insbesondere die Kontaktierung benachbarter Metallfolien bzw. deren fügetechnische Verbindung und damit einen gleichmäßigen Aufbau der Wabenstruktur behindern. Außerdem kann so auch gewährleistet werden, dass das mechanische Verhalten der Metallfolien über die gesamte Erstreckung nahe der Stirnfläche gleich ist. Zur "Breite" ist anzumerken, dass diese im Wesentlichen ausgehend von der Stirnfläche in Richtung der Kanäle bzw. senkrecht zur Stirnfläche zu bestimmen ist. Die "Erstreckung" der Metallfolie wird beispielsweise in der Ebene der Stirnfläche bestimmt und folgt im Wesentlichen dem Verlauf der Metallfolie an der Stirnfläche. Selbstverständlich können die Schweißnähte selbst auch Unterbrechungen aufweisen, wie sie beispielsweise bei einem getakteten Impulsschweißen entstehen können. Damit kann die Flexibilität der Folie günstig beeinflusst werden.

Darüber hinaus wird als vorteilhaft angesehen, dass die Breite der Umfalzungen im Bereich von 2 bis 10 mm (Millimeter) liegt. Ganz besonders bevorzugt liegt die Breite im Bereich zwischen 4 mm und 8 mm. Wird die Breite kleiner gewählt, können Probleme bei der Ausbildung der Schweißnaht entstehen. Außerdem ist die gleichmäßige Ausbildung von Umfalzungen dann gegebenenfalls nicht gewährleistet. Wird die Umfalzung mit einer größeren Breite bereitgestellt, ist eine gleichmäßige Ausprägung der Schweißnaht über die gesamte Breite schwierig. Außerdem ist zu berücksichtigen, dass mit einer größeren Breite der Umfalzung auch das Gewicht der Abgasbehandlungseinheit steigt.

Außerdem wird auch vorgeschlagen, dass zumindest ein Teil der Metallfolien außerhalb der Umfalzung Löcher aufweist. Die Löcher können insbesondere mehr als 40 % oder sogar mehr als 60 % der Fläche der Metallfolien zwischen den Umfalzungen bzw. der Umfalzung und einer Stirnfläche ausmachen. Damit kann einerseits das Gewicht der Abgasbehandlungseinheit weiter reduziert werden, außerdem kann so auch erreicht werden, dass eine Durchmischung der Abgasströmungen im Inneren der Abgasbehandlungseinheit stattfindet. Durch diesen Strömungsaustausch wird eine besonders turbulente Strömung im Inneren der Abgasbehandlungseinheit realisiert, wodurch insbesondere der Kontakt des Abgases mit einem auf den Metallfolien aufgebrachten Katalysator verbessert wird. Die Löcher können dabei insbesondere eine Größe von mindestens 2 mm² (Quadratmillimeter) oder sogar mindestens 1 cm² (Quadratzentimeter) oder sogar mindestens 3 cm² aufweisen.

Bei diesen Folien können zudem hervorstehende, insbesondere jeweils in einen Kanal hinein ragende, Leitflächen ausgebildet sein. Diese dienen insbesondere der Strömungsumlenkung des Abgases durch die Abgasbehandlungseinheit. Die Leitflächen können an Löcher angrenzen und/oder gegenüberliegend zu den Löchern ausgebildet sein.

Kumulativ oder alternativ dazu ist auch möglich, dass das Gehäuse mehrlagig ausgebildet ist. Das bedeutet beispielsweise, dass mehrere dünne Mantelfolien (konzentrisch zueinander angeordnet) vorgesehen sind. Gegebenenfalls können zwischen einer inneren Mantelfolie und einer äußeren Mantelfolie auch Isolationsmittel vorgesehen sein, die eine Wärmeabfuhr (durch Strahlung) nach außen behindern.

Einer Weiterbildung der Abgasbehandlungseinheit zur Folge sind die strukturierten Metallfolien, die benachbart zu einer Metallfolie mit einer Umfalzung ausgeführt ist, mit einer an die Materialdicke dieser Metallfolie mit einer Umfalzung angepassten Strukturhöhe ausgeführt. Damit ist insbesondere gemeint, dass die Strukturhöhe der strukturierten Metallfolie, die aufgrund der Umfalzung erhöhte Materialdicke der benachbarten Metallfolie kompensiert, also eine entsprechend kleiner bzw. größer ausgeführte Strukturhöhe hat. Das heißt mit anderen Worten insbesondere auch, dass die strukturierte Metallfolie in Kanalrichtung eine variierende Strukturhöhe aufweist.

Für den Fall, dass eine solche Abgasbehandlungseinheit zur motornahen Anwendung bei Kraftfahrzeugen vorgesehen ist, wird jedoch vorgeschlagen, dass die Lötverbindung ausgehend von der Stirnseite mit einem Abstand von 2 bis 4 mm (Millimeter) ausgebildet ist. Die Lötverbindung wird somit ein wenig in die Wabenstruktur hinein zurückversetzt. Die Stirnfläche dient dabei als thermischer Schutz für die Lötverbindungen, so dass auch bei diesen extremen Umgebungsbedingungen die Lötverbindung besonders dauerhaltbar ausgeführt ist.

Zudem wird hier noch ein Verfahren zur Herstellung einer Abgasbehandlungseinheit beschrieben, wobei die Abgasbehandlungseinheit zumindest ein Gehäuse und eine Wabenstruktur aufweist, wobei die Wabenstruktur Kanäle hat, welche zwischen Stirnflächen der Wabenstruktur verlaufen. Das Verfahren umfasst dabei zumindest folgende Schritte:
a) Bereitstellen von glatten und/oder zumindest teilweise strukturierten Metallfolien, die eine Materialdicke bis maximal 50 µm aufweisen,
b) Ausbilden einer Umfalzung mit einer vorgegebenen Breite ausgehend von einer Stirnkante der Metallfolien,
c) Ausbilden einer Schweißnaht der Metallfolien mit sich selbst im Bereich dieser Umfalzung,
d) Anordnen der Metallfolien zu einer Wabenstruktur,
e) Einfügen der Wabenstruktur in das Gehäuse, und
f) Ausbilden von Lötverbindungen zumindest zwischen den Metallfolien oder den Metallfolien und dem Gehäuse.

Das hier vorgeschlagene Verfahren eignet sich insbesondere zur Herstellung einer der vorstehend beschriebenen Ausgestaltungen der Abgasbehandlungseinheit.

Bezüglich Schritt b) ist auszuführen, dass die Umfalzung vor und/oder nach der Strukturierung der zumindest teilweise strukturierten Metallfolien eingebracht werden kann. Grundsätzlich ist es möglich, dass die Umfalzung nur an einer Stirnkante der Metallfolien hergestellt wird, es ist aber auch möglich, dass gegenüberliegende Umfalzungen an beiden Stirnkanten zeitgleich und/oder zeitlich versetzt ausgebildet werden. Die Orientierung der Umfalzung kann dabei gleichsinnig (also beispielsweise beide nach oben) oder gegensinnig (eine nach oben und eine nach unten) ausgeführt werden.

Bezüglich Schritt c) ist anzumerken, dass hier insbesondere die Ausbildung einer Schweißnaht stattfindet, die die gesamte Breite und/oder die gesamte Erstreckung der Umfalzung betrifft. Hierbei kommen insbesondere elektrische Widerstandsschweißverfahren (Widerstandspressschweißen) in Betracht, bei denen die Schweißverbindung aufgrund einer Jouleschen Widerstandserwärmung flächig ausgebildet wird.

Die so vorbereiteten Metallfolien können dann beispielsweise geschichtet und/oder gestapelt werden und dann gewickelt und/oder gewunden zur Wabenstruktur gefügt werden (Schritt d)). Diese Wabenstruktur wird dann gemäß Schritt e) vollständig und/oder zumindest teilweise in das Gehäuse eingeführt. Lotmittel kann vor und/oder nach Schritt e) der Wabenstruktur und/oder dem Gehäuse zugeführt werden, wobei gegebenenfalls zuvor Haftmittel an den gewünschten Stellen für die späteren Lotverbindungen vorgesehen wird.

Im Schritt f) wird der so vorbereitete Wabenkörper mit dem Lotmaterial thermisch behandelt, insbesondere in einen Lötofen eingeführt, wo die Abgasbehandlungseinheit über einen vorgegebenen Zeitraum und bei einem vorgegebenen Druck- und Temperaturprofil mittels des Lotes stoffschlüssig verbunden wird. Dieser Lötvorgang kann auch unter Vakuum oder Schutzgas durchgeführt werden.

In diesem Zusammenhang wird als besonders bevorzugt angesehen, dass die Schweißnaht in Schritt c) durch Impulsschweißen erzeugt wird. Dabei wird insbesondere auf folgendes Verfahren zurück gegriffen:

| | |
|---|---|
| Bezeichnung des Scheißverfahrens: | Rollnahtschweißen |
| Pulsweite: | nicht überlagernde Schweißpunkte |
| Vorschubgeschwindigkeit: | 0,5 bis 10 Meter pro Minute |
| Anpressdruck der Elektroden: | 500 bis 1500 Newton pro Zentimeter |

Die Abgasbehandlungseinheit findet bevorzugt Verwendung als Katalysator-Trägerkörper in Abgassystemen mobiler Verbrennungskraftmaschinen, wie beispielsweise Diesel- oder Otto-Motoren bei Personenkraftfahrzeugen. Aufgrund des geringen Gewichts und der der hohen Belastbarkeit finden diese Abgasbehandlungseinheiten besonders bevorzugten Einsatz bei Sport-Fahrzeugen.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung aufzeigen, diese jedoch die Erfindung nicht beschränken sollen. Es zeigen schematisch:

| | |
|---|---|
| Figur 1: | eine stirnseitige Ansicht einer Abgasbehandlungseinheit, |
| Figur 2: | eine strukturierte Metallfolie mit Umfalzungen, |
| Figur 3: | einen Längsschnitt durch eine Abgasbehandlungseinheit mit einem dünnwandigen Gehäuse, |
| Figur 4: | einen Querschnitt durch das Gehäuse aus Figur 3, und |
| Figur 5: | ein Abgassystem für ein Kraftfahrzeug. |

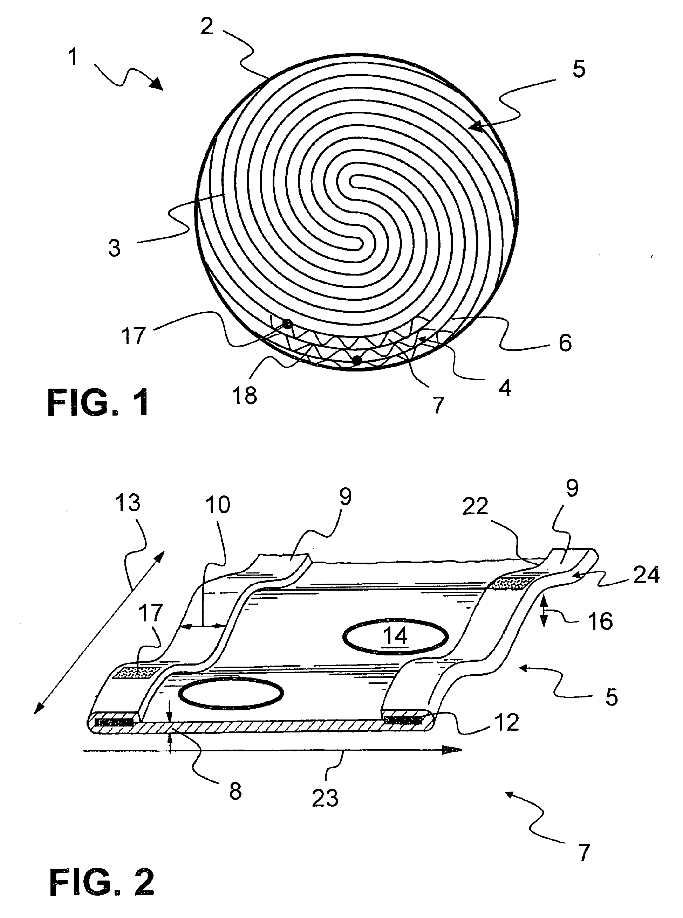

Figur 1 zeigt schematisch und als stirnseitige Ansicht eine Abgasbehandlungseinheit 1 mit einem zylindrischen Gehäuse 2 und der darin angeordneten Wabenstruktur 3. Die Wabenstruktur 3 ist mit S-förmig verlaufenden glatten Metallfolien 6 und strukturierten Metallfolien 7 gebildet. Diese Metallfolien 6, 7 bilden Kanäle 4 aus, die hier senkrecht zur Stirnfläche 5 (in die Zeichnungsebene hinein) verlaufen. Benachbarte glatte Metallfolien 6 und strukturierte Metallfolien 7 kontaktieren einander wiederholt, so dass eine Vielzahl innerer Kontaktpunkte 18 zwischen den Metallfolien ausgebildet ist. Schematisch sind hier auch lokale Lötverbindungen 17 ausgeführt, die nur bezüglich einer geringen Anzahl der inneren Kontaktpunkte 18 vorgesehen sind.

Figur 2 zeigt nun eine (schwach) strukturierte Metallfolie 7. Es ist darauf hinzuweisen, dass die Figur 2 nicht maßstabsgerecht ist. Insbesondere betrifft dies die Verhältnisse der Strukturhöhe 16 zur Erstreckung 13, der Breite 10 und/oder der Länge der Metallfolie in Kanalrichtung 23. Auch die Anzahl und Größe der dargestellten Löcher 14 muss nicht maßstabsgerecht sein.

Jedenfalls lässt die strukturierte Metallfolie 7 erkennen, dass die Struktur 24 nach Art einer Wellung ausgeführt ist, wobei hier eine im Wesentlichen gleichbleibende Strukturhöhe 16 in Richtung der Erstreckung 13 ausgeführt ist. Dies ist aber nicht zwingend erforderlich. Bezüglich der beiden gegenüberliegenden Stirnflächen 5 ist jeweils eine Umfalzung 9 mit der gleichen Orientierung (hier nur zur oberen Seite hin) vorgesehen. Die Umfalzungen 9 sind dadurch gebildet, dass ein Teilabschnitt der strukturierten Metallfolie 7 angrenzend zur Stirnkante 22 umgebogen bzw. umgeknickt und auf der Oberfläche der Metallfolie abgelegt wurde. Damit wird insbesondere eine Umfalzung 9 mit einer Breite von 4 bis 8 mm ausgebildet. Zur Fixierung der Umfalzung 9 auf der strukturierten Metallfolie 7 ist eine Schweißnaht 12 flächig im Bereich der Umfalzung 9 ausgeführt. Damit wird insbesondere erreicht, dass die ansonsten sehr geringe Materialstärke 8 von beispielsweise maximal 30 µm im Bereich der Umfalzungen 9 verstärkt und zudem durch die Schweißnaht 12 versteift wird.

Bezüglich einiger Strukturextrema, das heißt Wellenberge bzw. Wellentäler, werden später punktuell Lötverbindungen 17 ausgebildet, die hier ebenfalls angedeutet sind.

Im Bereich zwischen den Umfalzungen 9 kann zudem eine Vielzahl von (relativ großen) Löchern 14 vorgesehen sein, die gegebenenfalls auch größer als eine Strukturweite sind (also mindestens einen Wellenberg und/oder ein Wellental überdecken), um durch die strukturierte Metallfolie 7 einen Gasaustausch in mehrere benachbarte Kanäle zu erlauben.

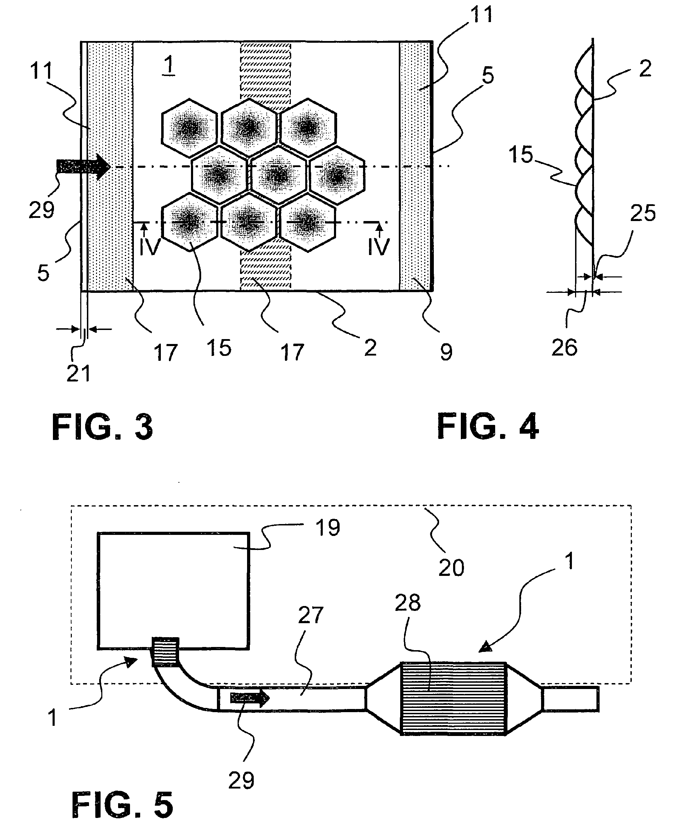

Figur 3 zeigt nun einen Längsschnitt durch eine Abgasbehandlungseinheit 1, wobei im Wesentlichen nur das Gehäuse 2 dargestellt ist. Insbesondere wird hier das Lötbild für die Abgasbehandlungseinheit 1 dargestellt. So ist z. B. links in Figur 3 der Bereich 11 mit den Umfalzungen dargestellt, auf den das Abgas aufgrund der Strömungsrichtung 29 zuerst auftritt. Dieser Bereich 11, in dem auch die Lötverbindungen 17 der Metallfolien miteinander (und ggf. auch mit dem Gehäuse 2) ausgebildet sind, ist dabei von der dortigen Stirnfläche 5 zurückgesetzt, nämlich um einen Abstand 21 von 2 bis 4 mm. Auf der gegenüber liegenden Stirnfläche 5, wo also das Abgas austritt, ist ebenfalls ein Bereich 11 mit den Umfalzungen 9 und den Lötverbindungen gebildet, wobei hier der Bereich 11 schmaler ist und direkt an die Stirnfläche 5 anschließt. In etwa mittig zwischen diesen beiden Bereichen 11 bzw. des Gehäuses 2 ist ein zusätzlicher Streifen mit einer Lötverbindung 17 vorgesehen, wobei dieser beispielsweise auch die alleinige Fixierung der Metallfolien im Gehäuse 2 realisiert sein kann. Dieser Lotstreifen kann auch beliebig breit ausgeführt sein, sich, beispielsweise bei motornaher Anordnung der Abgasbehandlungseinheit 1, auch über die gesamte Länge des Gehäuses 2 erstrecken.

Das Gehäuse 2 ist nun mit einer Vielzahl von hin zur Wabenstruktur gerichteten, lokalen Einbuchtungen 15 ausgeführt, wobei hier nur eine geringe Anzahl schematisch dargestellt ist - sie sind insbesondere aneinander angrenzend an der gesamten inneren Oberfläche des Gehäuses 2 vorgesehen. Da die Einbuchtungen mit dem Material des Gehäuses 2 selbst gebildet sind (Umformung der Gehäusebereiche), können diese auch von außen wahrgenommen werden. Die lokalen Einbuchtungen 15 weisen hier eine sechseckige Grundfläche auf, wobei beispielsweise nur die dunkel eingefärbten Bereiche eine Kontaktfläche hin zur Wabenstruktur ausbilden. Zur Veranschaulichung der Form der lokalen Einbuchtungen 15 ist ein Schnitt IV-IV angedeutet, der in Figur 4 schematisch gezeigt ist.

Demnach zeigt Figur 4 einen Schnitt durch das Gehäuse 2, wobei das Gehäuse 2 mit einer relativ geringen Gehäusestärke 25 ausgeführt ist, beispielsweise in einem Bereich deutlich unter 1 mm. In diese Wand des Gehäuses 2 sind nun lokale Einbuchtungen 15 ausgeformt, beispielsweise durch einen Prägevorgang oder eine vergleichbare Umformung. Diese Einbuchtungen 15 erstrecken sich dabei über ein Vielfaches der Gehäusestärke 25, beispielsweise bis in eine Tiefe 26 in innere Bereiche des Gehäuses 2 von mindestens 2 mm (Millimeter) oder sogar mindestens 5 mm oder sogar mindestens 1 cm (Zentimeter).

Figur 5 zeigt nun schematisch und beispielhaft den prinzipiellen Aufbau eines Abgassystems bei einem Kraftfahrzeug 20. Das in der Verbrennungskraftmaschine 19 (z. B. Diesel- oder Otto-Motor) erzeugte Abgas wird über eine Abgasleitung 27 einer oder mehrerer Abgasbehandlungseinheiten 1 zugeführt. Dabei durchströmt das Abgas in Strömungsrichtung 29 bevorzugt mehrere Abgasbehandlungseinheiten 1, wobei diese gegebenenfalls mit unterschiedlichen Beschichtungen 28 ausgeführt sind, um unterschiedliche Konvertierungs- und/oder Speicherfunktionen bezüglich der aus dem Abgas zu entfernenden Schadstoffe zu bewirken. Aus der Figur 5 geht auch schematisch hervor, dass eine Abgasbehandlungseinheit 1 motornah, also beispielsweise in unmittelbarem Kontakt mit der Verbrennungskraftmaschine 19 (bzw. in dem sich daran anschließenden Krümmer), positioniert sein kann, wo besonders hohe thermische und dynamische Belastungen auftreten. Darüber hinaus ist auch möglich, eine Abgasbehandlungseinheit 1 im Unterbodenbereich des Kraftfahrzeugs 20 anzuordnen, wo diese auch äußeren Umgebungsbedingungen ausgesetzt ist und dort zumeist auch geringere thermische und dynamische Belastungen auftreten.

### Bezugszeichenliste

- 1: Abgasbehandlungseinheit
- 2: Gehäuse
- 3: Wabenstruktur
- 4: Kanal
- 5: Stirnfläche
- 6: glatte Metallfolie
- 7: strukturierte Metallfolie
- 8: Materialdicke
- 9: Umfalzung
- 10: Breite
- 11: Bereich
- 12: Schweißnaht
- 13: Erstreckung
- 14: Loch
- 15: Einbuchtung
- 16: Strukturhöhe
- 17: Lötverbindung
- 18: innerer Kontaktpunkt
- 19: Motor
- 20: Kraftfahrzeug
- 21: Abstand
- 22: Stirnkante
- 23: Kanalrichtung
- 24: Struktur
- 25: Gehäusestärke
- 26: Tiefe
- 27: Abgasleitung
- 28: Beschichtung
- 29: Strömungsrichtung

## Patentansprüche

1. Abgasbehandlungseinheit (1) aufweisend zumindest ein Gehäuse (2) und eine Wabenstruktur (3), wobei die Wabenstruktur (3) Kanäle (4) hat, welche zwischen Stirnflächen (5) der Wabenstruktur (3) verlaufen und welche mit mindest teilweise strukturierten Metallfolien (6, 7) gebildet sind, die eine Materialdicke (8) bis maximal 50 µm aufweisen, wobei wenigstens ein Teil der Metallfolien (6, 7) zumindest im Bereich einer Stirnfläche (5) mit einer Umfalzung (9) einer vorgegebenen Breite (10) ausgeführt ist und weiter im Bereich (11) dieser Umfalzung (9) eine Schweißnaht (12) der Metallfolie (6, 7) mit sich selbst ausgebildet ist, **dadurch gekennzeichnet, dass** zumindest die Metallfolien (6, 7) miteinander nur in dem Bereich (11) mit der Umfalzung (9) Lötverbindungen (17) aufweisen und mindestens 1 % und höchstens 20 % innerer Kontaktpunkte (18) der Metallfolien (6, 7) in dem Bereich (11) eine Lötverbindung (17) bilden, wobei das Gehäuse (2) eine Vielzahl hin zur Wabenstruktur (3) gerichtete, lokale Einbuchtungen (15) aufweist, die eine Versteifung des Gehäuses (2) bewirken, und das Gehäuse (2) eine Gehäusestärke (25) kleiner 1 mm aufweist, insbesondere kleiner 0,5 mm.

2. Abgasbehandlungseinheit (1) nach Patentanspruch 1, bei der sich die Schweißnaht (12) über die Breite (10) der Umfalzung (9) und eine Erstreckung (13) der Umfalzung (9) entlang der Metallfolie (6, 7) erstreckt.

3. Abgasbehandlungseinheit (1) nach Patentanspruch 1 oder 2, bei der die Breite (10) der Umfalzung (9) im Bereich von 2 bis 10 Millimeter beträgt.

4. Abgasbehandlungseinheit (1) nach einem der vorhergehenden Patentansprüche, bei der zumindest ein Teil der Metallfolien (6, 7) außerhalb der Umfalzung (9) Löcher (14) aufweist.

5. Abgasbehandlungseinheit (1) nach einem der vorhergehenden Patentansprüche, bei der strukturierte Metallfolien (6, 7), die benachbart zu einer Metallfolie (6, 7) mit einer Umfalzung (9) aufgeführt ist, eine an die Materialdicke (8) dieser Metallfolie (6, 7) mit einer Umfalzung (9) angepasste Strukturhöhe (16) aufweist.

6. Abgasbehandlungseinheit (1) nach einem der vorhergehenden Patentansprüche 1 bis 5 zur motornahen Anwendung bei Kraftfahrzeugen (20), bei dem die Lötverbindung (17) ausgehend von der Stirnfläche (5) mit einem Abstand (21) von 2 bis 4 Millimeter ausgebildet sind.

## Claims

1. An exhaust-gas treatment unit (1) having at least a housing (2) and a honeycomb structure (3), wherein the honeycomb structure (3) has channels (4) which run between end surfaces (5) of the honeycomb structure (3) and which are formed with at least partially structured metal foils (6, 7) which have a material thickness (8) of at most 50 µm, wherein at least a part of the metal foils (6, 7) is formed, at least in the region of one end surface (5), with a fold (9) of a predefined width (10), and furthermore a welded joint (12) of the metal foil (6, 7) to itself is formed in the region (11) of said fold (9), **characterized in that** at least the metal foils (6, 7) have brazed connections (17) to one another only in the region (11) with the fold (9) and at least 1% and at most 20% of inner contact points (18) of the metal foils (6, 7) in the region (11) form a brazed connection (17), wherein the housing (2) has a multiplicity of local indentations (15) directed toward the honeycomb structure (3), which cause a stiffening of the housing (2), and the housing (2) has a housing thickness (25) of less than 1 mm, in particular less than 0,5 mm.

2. The exhaust-gas treatment unit (1) according to claim 1, in which the welding joint (12) extends over the width (10) of the fold (9) and an extent (13) of the fold (9) along the metal foil (6, 7).

3. The exhaust-gas treatment unit (1) according to claim 1 or 2, in which the width (10) of the fold (9) is in the range from 2 to 10 millimeters.

4. The exhaust-gas treatment unit (1) according to one of the preceding claims, in which at least a part of the metal foils (6, 7) has holes (14) outside the fold (9).

5. The exhaust-gas treatment unit (1) according to one of the preceding claims, in which structured metal foils (6, 7) formed adjacent to a metal foil (6, 7) with a fold (9) have a structure height (16) matched to the material thickness (8) of said metal foil (6, 7) with a fold (9).

6. The exhaust-gas treatment unit (1) according to one of the preceding claims 1 to 5 for close-coupled use in motor vehicles (20), in which the brazed connection (17) is formed at a distance (21) of 2 to 4 millimeters from the end surface (5).

## Revendications

1. Unité de traitement de gaz d'échappement (1), comportant au moins un boîtier (2) et une structure en nids d'abeilles (3), la structure en nids d'abeilles (3) ayant des canaux (4) qui s'étendent entre les faces frontales (5) de la structure en nids d'abeilles (3) et qui sont formés avec des feuilles métalliques au moins structurées partiellement (6, 7), qui ont une épaisseur de matériau (8) jusqu'à maximalement 50 µm, au moins une partie des feuilles métalliques (6, 7) étant réalisée au moins dans la région d'une face frontale (5), avec un sertissage (9) d'une largeur prédéterminée (10) et en plus dans la région (11) de ce sertissage (9) une soudure (12) de la feuille métallique (6, 7) étant réalisée avec elle-même, **caractérisée en ce qu'**au moins les feuilles métalliques (6, 7) ont entre elles uniquement dans la région (11) des liaisons brasées (17) avec le sertissage (9) et au moins 1 % et au maximum 20 %, de points de contact (18) intérieurs des feuilles métalliques (6, 7) dans la région (11) forment une liaison brasée (17), le boîtier (2) disposant d'une multiplicité d'échancrures locales (15) dirigées vers la structure en nids d'abeilles (3), les échancrures provoquant un renforcement du boîtier (2) et le boîtier (2) ayant un calibre de boîtier (25) plus faible qu'un mm, notamment plus faible que 0,5 mm.

2. Unité de traitement de gaz d'échappement (1) selon la revendication 1, dans le cas de laquelle la soudure (12) s'étend sur la largeur (10) du sertissage (9) et une étendue (13) du sertissage (9) le long de la feuille métallique (6, 7).

3. Unité de traitement de gaz d'échappement (1) selon la revendication 1 ou 2, dans le cas de laquelle la largeur (10) du sertissage (9) se trouve dans l'étendue de 2 à 10 mm.

4. Unité de traitement de gaz d'échappement (1) selon l'une des revendications précédentes, dans le cas de laquelle au moins une partie des feuilles métalliques (6, 7) a des trous (14) à l'extérieur du sertissage (9).

5. Unité de traitement de gaz d'échappement (1) selon l'une des revendications précédentes, dans le cas de laquelle des feuilles métalliques structurées (6, 7), qui se trouvent de façon adjacente à une feuille métallique (6, 7) avec un sertissement (9), ont une hauteur structurelle (16) adaptée à l'épaisseur du matériau (8) de cette feuille métallique (6, 7) avec un sertissement.

6. Unité de traitement de gaz d'échappement (1) selon l'une des revendications précédentes 1 à 5 destinée à être utilisée près du moteur dans des véhicules automobiles (20), dans lesquels les liaisons brasées (17) sont réalisées avec un écart (21) de 2 à 4 millimètres de la face frontale (5).
